# FASCICULE DE BREVET EUROPEEN

(11) **EP 2 012 073 B1**
(45) Date de publication et mention de la délivrance du brevet: **27.11.2013**
(21) Numéro de dépôt: 08290095.2
(22) Date de dépôt: 01.02.2008
(51) Int. Cl.: F28F 1/42, F24H 8/00, F24H 9/00, F28D 7/10, F28F 13/08

(54) **Echangeur thermique pour chaudière, chaudière equipée d'un tel échangeur et procédé de fabrication d'un tel échangeur**
Wärmetauscher für einen Kessel, Kessel mit so einem Wärmetauscher und Verfahren zur Anfertigung so eines Wärmetauschers
Heat exchanger for a boiler, boiler having such a heat exchanger and method for producing such a heat exchanger

(30) Priorité: 05.02.2007 FR 0753063
(43) Date de publication de la demande: 07.01.2009
(73) Titulaire: Frisquet SA, 77100 Meaux (FR)
(72) Inventeur: Pechoux, Christophe, 77450 Conde-Sainte-Libiaire (FR); Gleyot, Yann, 77109 Meaux Cedex (FR)
(74) Mandataire: Novagraaf Technologies

(56) Documents cités:
- FR-A- 2 498 745
- GB-A- 935 091
- US-A- 2 993 682
- US-A- 4 589 374

## Description

### DOMAINE DE L'INVENTION

La présente invention concerne une chaudière à condensation destinée à des appareils et installations de chauffage et chauffage d'eau, et qui utilisent un brûleur disposé en relation avec la chambre de combustion de la chaudière, ainsi qu'un ventilateur soufflant qui oblige les fumées de combustion à circuler le long d'un échangeur, ces fumées cédant leur chaleur, pendant leur trajet, à travers un dispositif échangeur de température à l'intérieur duquel passe l'eau à chauffer.

L'optimisation du fonctionnement de telles chaudières conduit à rechercher des vitesses de circulation des fumées élevées, afin d'augmenter le rendement de l'échange thermique, mais inversement à réduire les pertes de charges, impliquant des vitesses généralement faibles.

L'invention concerne une chaudière améliorée, d'encombrement réduit, et conciliant les contraintes liées à l'augmentation du rendement et à la réduction des pertes de charges.

Plus particulièrement, l'invention se rapporte à une conception particulière du dispositif échangeur de température qui permettra des rendements sensibles tout en ayant des dimensions, poids et coûts de fabrication réduits.

### ÉTAT DE LA TECHNIQUE ANTÉRIEURE

On connaît le principe général de telles chaudières. À titre d'exemple, le brevet français FR2723632 décrit un dispositif d'échange de chaleur pour une chaudière basse température du type à chambre sèche, destiné à envelopper un foyer cylindrique borgne de la chaudière, délimité par une surface de révolution, et à permettre l'échange de chaleur entre des gaz chauds produits par un brûleur au centre du foyer et de l'eau circulant autour dudit dispositif, et comportant des ailettes situées du côté du foyer, caractérisé en ce que les ailettes ne sont pas parallèles à l'axe du foyer.

Le brevet européen EP0981024 décrit une chaudière comprenant :
- une chemise d'eau qui est raccordée à une conduite d'aller et une conduite de retour,
- une chambre de combustion située dans la partie supérieure de la chemise d'eau,
- un brûleur qui est joint à la chambre de combustion, et
- au moins un tube de chauffe qui traverse vers le bas depuis le brûleur la chemise d'eau, communique avec une conduite de fumées et contient un certain nombre d'éléments directeurs de fumées,

Le tube de chauffe sort vers le haut de la chemise d'eau et sa partie supérieure formant la chambre de combustion. Le brûleur étant un brûleur plongeant et étant placé, dirigé vers le bas, sur l'extrémité supérieure du tube de chauffe. Les éléments directeurs de fumées est en forme de pot, leur bord supérieur saillant radialement vers l'extérieur étant contigu au tube de chauffe et leur paroi latérale présentant des ouvertures de passage du genre buse.

Un autre brevet européen, publié sous le numéro EP0191147A1 décrit une chaudière à gaz ou à huile comportant une chemise d'eau verticale sensiblement cylindrique, une chambre de combustion pour un brûleur situé à l'extrémité supérieure de la chaudière et au moins un tube chauffant monté dans la chemise d'eau et conduisant de la chambre de combustion à un collecteur de fumées situé à l'extrémité inférieure de la chaudière. Le tube chauffant contient des pièces d'insertion conductrice en forme de pots qui sont insérés les unes au-dessus des autres. Le bord supérieur de ces pots est au contact de la paroi du tube chauffant. La partie basse du pot située à une certaine distance de la paroi du tube comporte des ouvertures de passage orientées radialement pour plusieurs jets de fumée dirigés vers la paroi du tube. Le tube chauffant comporte au moins sur la moitié inférieure de sa longueur un côté intérieur résistant à la corrosion. Le collecteur de fumées comporte, sous l'orifice du tube chauffant, une cavité qui reçoit les condensats et peut être vidangée.

On connaît dans l'état de la technique la demande de brevet EP1674805 décrivant une chaudière comportant un échangeur thermique dont les parois communiquent avec une chemise d'eau. L'échangeur thermique est muni dans sa partie supérieure d'un brûleur et d'au moins un insert traversant longitudinalement l'échangeur thermique. L'insert est constitué par un assemblage de coupelles annulaires présentant une ouverture centrale.

On connaît également le Brevet Européen EP1028454. Dans celui-ci il est décrit une chaudière à condensation dans laquelle sont employés des tuyaux ronds qui, afin de faciliter l'échange calorifique, sont pourvus d'ailettes discoïdales sur toute leur longueur et qui sont agencés en couches en quinconce.

Le document FR 2 498 745 représente le préambule de la revendication 1 et divulgue un échangeur de chaleur comportant un insert formé de deux viroles tubulaires coaxiales délimitant un conduit tubulaire. En outre, le conduit présente des rétrécissements périodiques.

Toutefois, ce document ne divulgue pas une virole présentant une succession de segments annulaires formant une zone divergente, une zone convergente et une zone de section constante.

Ce document représente aussi le preambule des revendications 8 et 12.

### EXPLICATION ET AVANTAGES DE L'INVENTION

L'invention concerne selon son acception la plus générale un échangeur thermique pour chaudière, en particulier pour des appareils et installations de chauffage et chauffage d'eau, selon la revendication 1.

Avantageusement, la virole extérieure au moins présentant une succession de segments annulaires formant une première zone divergente, une deuxième zone convergente et une troisième zone de section constante. La virole intérieure délimite avec la virole extérieure un passage tubulaire pour la circulation de l'eau. La virole extérieure forme avec le corps du condenseur un passage tubulaire de fumées de section variable.

La configuration de l'insert et du corps de condensateur conduit à la formation de chicanes annulaires qui modifient périodiquement la section du passage des fumées et provoquent des lignes d'écoulement maximisant les échanges entre les fumées chaudes et la surface extérieure de la virole extérieure, sans pour autant conduire à des pertes de charges excessives.

Avantageusement, la longueur de la zone divergente, mesurée selon l'axe longitudinal, est comprise entre 2 et 4 fois la longueur de la zone convergente suivante ; la longueur de la zone à section constante, mesurée selon l'axe longitudinal, est comprise entre 2 et 4 fois la longueur de la zone convergente suivante.

Selon un mode de réalisation préféré, les viroles présentent entre 5 et 15 segments.

Selon un mode de réalisation particulier, la longueur des segments est comprise entre 30 et 40 millimètres pour une virole extérieure présentant une section comprise entre 95 et 120 millimètres, et une longueur comprise entre 400 et 500 millimètres.

De préférence, les viroles sont réalisées par hydroformage d'un tube réalisé par pliage d'une feuille d'acier inoxydable.

L'invention concerne également une chaudière selon la revendication 8.

Selon un mode de réalisation avantageux, l'échangeur thermique est situé à côté du brûleur, les fumées traversant l'espace compris entre la virole extérieure de l'insert et le corps du condenseur depuis un raccord prévu à la partie supérieure du corps du condenseur jusqu'à l'ouverture de la partie inférieure de l'insert, puis les fumées traversent l'espace tubulaire intérieur de l'insert, jusqu'à une évacuation prévue à la partie supérieure du corps du condenseur.

Cette réalisation correspond au cas particulier où l'échangeur selon l'invention n'est pas l'échangeur principal mais un échangeur complémentaire ou « condenseur » qui s'intègre facilement dans la chaudière grâce à l'évacuation des fumés par le milieu de la virole centrale.

L'invention concerne également un procédé de fabrication d'un échangeur selon l'invention, consistant à assembler coaxialement deux viroles formées chacune à partir d'un tube obtenu par pliage d'une tôle d'acier, déformé ensuite par hydroformage.

D'autres particularités proposées par la présente invention sont illustrées dans la description détaillée qui suit.

### DESSINS ET RÉFÉRENCES

Afin de mieux comprendre la nature de la présente invention, un mode de réalisation industrielle préféré est représenté dans les dessins annexés, seulement à titre d'exemple illustratif et non limitatif, où :
- la figure 1 est une vue en coupe illustrant de manière simplifiée la structure d'un échangeur thermique pour chaudière selon l'invention,
- la figure 2 montre un agrandissement du détail I qui se présente entouré à la figure 1,
- la figure 3 est une vue en coupe d'une chaudière selon l'invention,
- la figure 4 est une vue en coupe d'une variante préférée de réalisation d'une chaudière selon l'invention.

### EXPOSITION D'UN MODE DE RÉALISATION PRÉFÉRÉ

En rapport avec la figure et les références indiquées ci-dessus, dans le plan annexé est illustré un mode d'exécution préféré d'une chaudière selon l'invention.

Il s'agit d'une chaudière, non représentée dans sa totalité, que l'on emploie dans des appareils et installations de chauffage et chauffage de l'eau, et qui utilisent un brûleur à fioul, à gaz ou à combustible quelconque, ainsi qu'un ventilateur soufflant qui oblige les fumées de combustion à circuler selon un trajet où elles cèdent leur chaleur à travers un dispositif échangeur de température, à l'intérieur duquel passe l'eau à chauffer.

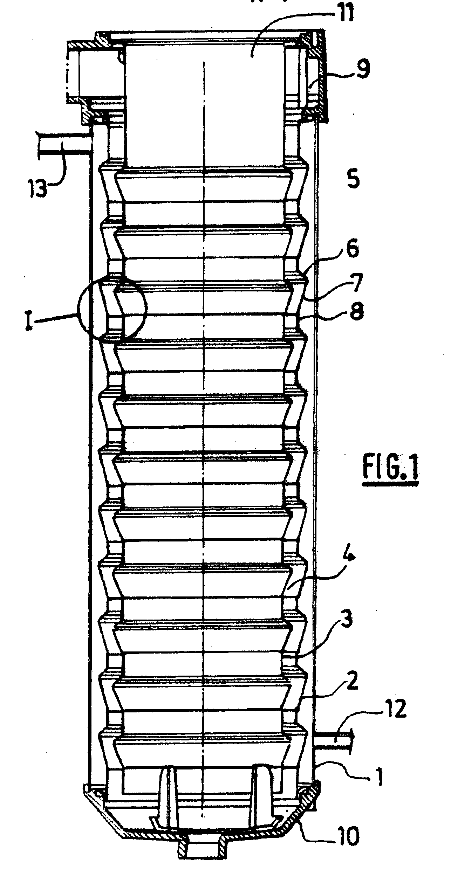

La structure selon l'invention est illustrée à la figure 1.

L'échangeur thermique est constitué par un corps de condenseur (1) tubulaire constitué par un corps en acier inoxydable de section constante. A l'intérieur de ce corps de condenseur (1) est logé un insert formé d'une virole extérieure (2) et d'une virole intérieure (3).

Ces viroles délimitent entre elles un conduit de fumées tubulaire (4) présentant des chicanes provoquant périodiquement la déflexion de la veine de fumées, avec une composante radiale. Les viroles présentent une alternance de zones coniques divergentes (7) de longueur L_{d} avec une pente P_{d}, et de zones coniques convergentes (6), de longueur de longueur L_{c} avec une pente P_{c}. La longueur L_{d} des zones coniques divergentes (7) est supérieure à la longueur L_{c} des zones coniques convergentes (6). La longueur L_{d} des zones coniques divergentes (7) est comprise entre trois et six fois la longueur L_{c} des zones coniques convergentes (6).

Par ailleurs la pente P_{c} de la partie convergente est comprise entre 120° et 160°, de préférence d'environ 135° par rapport au plan transversal perpendiculaire à l'axe de la virole, alors que la pente P_{d} de la partie divergente est comprise entre 225° et 260°, de préférence d'environ 250° par rapport au plan transversal perpendiculaire à l'axe de la virole.

L'insert est relié à un conduit d'arrivée des fumées (9). Les fumées traverses l'espace tubulaire (4) délimité par les deux viroles (2, 3), pour déboucher ensuite dans la partie inférieure dans le fond de l'échangeur (10) pour traverser ensuite le conduit formé par l'intérieur de la virole intérieure (3). Les fumées sont ensuite évacuées dans la partie supérieure par un conduit (11).

L'eau arrive par un conduit (12) prévue dans la chemise (1) du corps de chauffe, dans la partie inférieure, et ressort par un conduit (13) prévu à la partie supérieure de cette chemise.

Les viroles sont formées par des tôles d'acier inoxydable hydroformées, d'une épaisseur de 0,5 millimètres. Elles présentent une succession de onze segments (5) annulaires.

La hauteur d'un segment annulaire est de 33,5 millimètres.

Chaque segment présente une première zone de section croissante (6), prolongée par une zone de section constante (8), cette dernière étant prolongée par une zone de section décroissante (7).

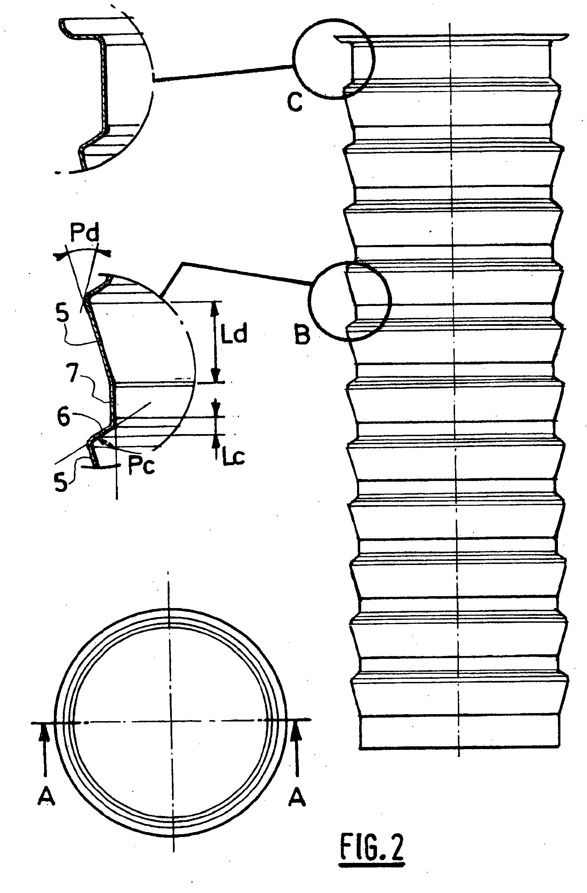

La figure 2 montre un agrandissement du détail I qui se présente entouré à la figure 1. La hauteur des zones de section croissante (6) est de six millimètres. La hauteur de la zone de section constante (8) est de 7,5 millimètres. La hauteur de la zone de section décroissante (7) est de 20 millimètres.

Pour la virole extérieure (2), la section extérieure maximale est de 118,8 millimètres, et la section intérieure maximale est de 103 millimètres.

La section intérieure du condenseur est de 129,6 millimètres.

Pour la virole intérieure (3), la section extérieure maximale est de 103 millimètres et la section minimale de 92 millimètres.

Le conduit annulaire (4) traversé par l'eau à réchauffer présente une épaisseur d'environ 15 millimètres.

Les zones divergentes (7) de la virole extérieure agissent comme des déflecteurs (13) génèrent des turbulences et des changements de direction de la veine de fumées. Ces façonnages obligent la veine de fumées à "lécher" les zones convergentes (6) et de section constante (8) de la virole extérieure (2).

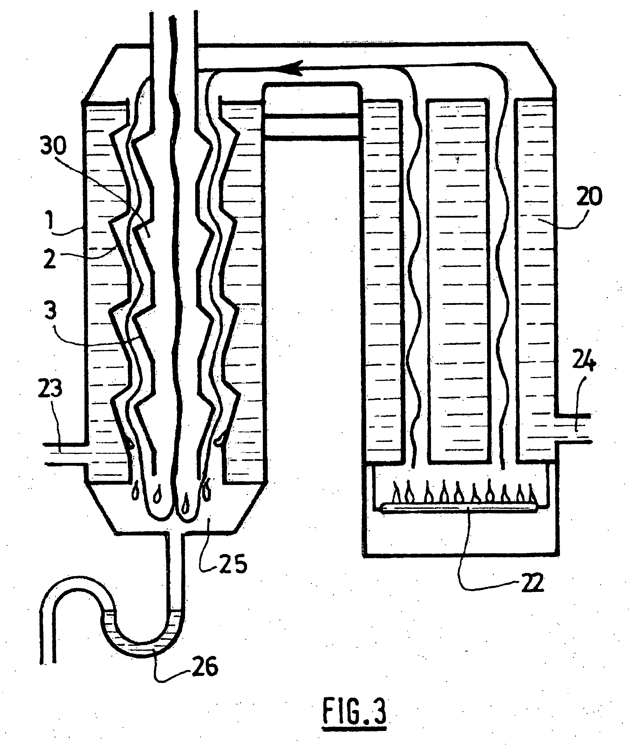

La figure 3 représente une vue en coupe d'une chaudière utilisant un échangeur thermique selon l'invention. Il comprend un corps de chauffe (20) formant un échangeur principal comportant un brûleur (22). Cet échangeur principal (20) est raccordé à l'échangeur thermique (30) constituant un échangeur secondaire (ou condenseur) par un conduit (21) par lequel les fumées chaudes sont injectées dans l'échangeur. Ce conduit (21) est relié au raccord (9) d'alimentation de l'échangeur en fumées chaudes. Ces fumées traversent l'espace tubulaire compris entre les deux viroles (2, 3) pourvu de chicanes. Ces chicanes provoquent des déflexions du flux de fumées assurant un échange maximum de chaleur avec l'eau circulant entre la chemise (1) et la virole extérieure (2), les pertes de charges étant néanmoins minimisées. Les fumées poursuivent ensuite leur trajectoire en traversant l'intérieure de la virole (3), pour être évacuées par une cheminée (13) prévue à la partie supérieure de l'échangeur.

Le corps de chauffe (20) est disposé à coté de l'échangeur, ce qui permet de réaliser des équipements compacts, et facilitant la maintenance. Cette configuration facilite le remplacement des deux parties de la chaudière en cas de défaillance de l'une d'entre elles.

L'eau froide est introduite dans l'échangeur secondaire par le conduit d'alimentation (23). L'eau chaud est récupérée à la sortie de l'échangeur principal par un conduit (24).

Le fond de l'échangeur secondaire (30) présente une partie conique (25) débouchant dans un système (26) de récupération des condensats.

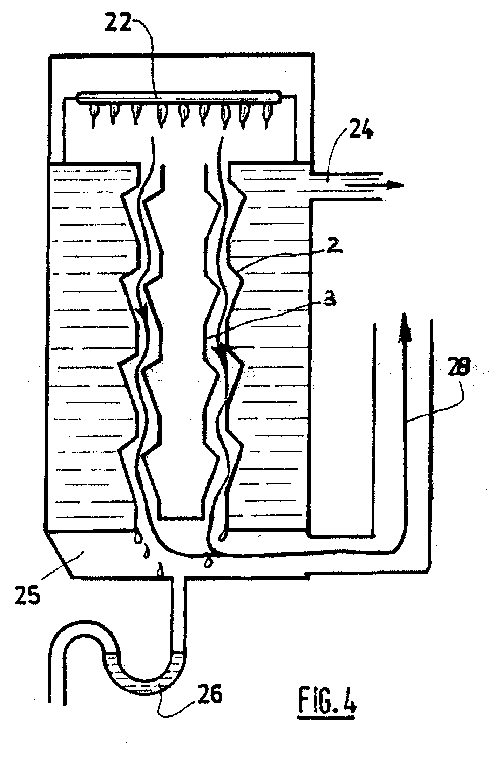

La figure 4 représente une vue d'une variante de réalisation d'une telle chaudière.

La chaudière présente un brûleur (22) disposé au-dessus de l'échangeur thermique, dans l'axe médian des deux viroles (2, 3).

Les fumées et gaz chaud traverses l'espace chicané compris entre les deux viroles (2, 3), et sont ensuite évacués par une cheminée (28).

L'eau chaude est récupérée par un conduit (27). Le fond de l'échangeur secondaire (30) présente une partie conique (25) débouchant dans un système (26) de récupération des condensats.

## Revendications

1. Échangeur thermique pour chaudière, comprenant un insert disposé sur le trajet des fumées de combustion, ces fumées cédant leur chaleur à l'eau à chauffer pendant leur trajet à travers ledit insert,
ledit insert étant formé de deux viroles tubulaires coaxiales (2, 3), délimitant un conduit de fumées tubulaire (4) présentant des rétrécissements périodiques provoquant une déflexion de la veine de fumées avec une composante radiale ; ledit
échangeur thermique étant **caractérisé en ce que** les viroles
extérieure (2) et intérieure (3) présentent chacune une succession de segments (5) annulaires formant une zone divergente (7), une zone convergente (6) et une zone de section constante (8), lesdits segments (5) de la virole intérieure (3) étant décalés axialement par rapport aux segments (5) de la virole extérieure (2) d'un pas correspondant sensiblement à la distance radiale entre la surface de la virole intérieure (3) et la surface de la virole extérieure (2), la section extérieure maximale de la virole intérieure (3) étant inférieure ou égale à la section intérieure minimale de la virole extérieure (2).

2. Échangeur thermique pour chaudière selon la revendication 1, **caractérisé en ce que** la virole intérieure (3) délimite avec la virole extérieure (2) un passage tubulaire de fumées de section variable et la virole extérieure (2) forme avec le corps du condenseur (1) un passage tubulaire pour la circulation de l'eau.

3. Échangeur thermique pour chaudière selon la revendication 1 ou 2, **caractérisé en ce que** la longueur de la zone divergente (7), mesurée selon l'axe longitudinal, est comprise entre 2 et 4 fois la longueur de la zone convergente (6) suivante.

4. Échangeur thermique pour chaudière selon la revendication 1 ou 2, **caractérisé en ce que** la longueur de la zone à section constante (8), mesurée selon l'axe longitudinal, est comprise entre 2 et 4 fois la longueur de la zone convergente (6) suivante.

5. Échangeur thermique pour chaudière selon l'une quelconque des revendications 1 à 4, **caractérisé en ce que** les viroles (2, 3) présentent entre 5 et 15 segments (5).

6. Échangeur thermique pour chaudière selon l'une quelconque des revendications 1 à 5, **caractérisé en ce que** la longueur des segments (5) est comprise entre 30 et 40 millimètres pour une virole extérieure (2) présentant une section comprise entre 95 et 120 millimètres, et une longueur comprise entre 400 et 500 millimètres.

7. Échangeur thermique pour chaudière selon l'une quelconque des revendications précédentes, **caractérisé en ce que** les viroles (2, 3) sont réalisées par hydroformage d'un tube formé par pliage d'une feuille d'acier inoxydable.

8. Chaudière comprenant un brûleur et un échangeur
thermique selon l'une des revendications 1 à 7, ledit
échangeur thermique comprenant un insert formé de deux viroles (2, 3) tubulaires coaxiales, la virole intérieure (3) délimitant avec la virole extérieure (2) un passage tubulaire (4) de fumées de section variable, la virole extérieure (2) formant avec le corps du condenseur (1) un passage tubulaire pour la circulation de l'eau, ladite chaudière étant **caractérisé en ce que** la virole extérieure (2) au moins présente une succession de segments (5) annulaires formant une zone divergente (7), une zone convergente (6) et une zone de section constante (8).

9. Chaudière selon la revendication précédente, **caractérisée en ce que** l'échangeur thermique comprend un insert disposé sur le trajet des fumées de combustion, ces fumées cédant leur chaleur, pendant leur trajet, à travers ledit insert, ledit insert étant formé de deux viroles tubulaires coaxiales (2, 3) délimitant un conduit de fumées tubulaire (4) présentant des rétrécissements périodiques provoquant une déflexion de la veine de fumées avec une composante radiale, l'insert délimitant avec le corps (1) de l'échangeur thermique un passage à l'intérieur duquel passe l'eau à chauffer.

10. Chaudière selon la revendication 8 ou 9, **caractérisée en ce qu'**il comprend un échangeur thermique secondaire (30) (condenseur) positionné à coté du brûleur (22) associé à un échangeur principal (20), les fumées traversant l'espace tubulaire compris entre les deux viroles (2, 3) de l'insert depuis un raccord (9) prévu à la partie supérieure du corps du condenseur (1) jusqu'à l'ouverture de la partie inférieure de l'insert, puis les fumées traversent l'espace tubulaire intérieur de l'insert, jusqu'à une évacuation prévue à la partie supérieure du corps du condenseur (1).

11. Chaudière selon la revendication 8 ou 9, **caractérisée en ce qu'**elle comprend un brûleur (22) disposé au-dessus de l'échangeur thermique (20) comprenant un insert disposé sur le trajet des fumées de combustion, ces fumées cédant leur chaleur, pendant leur trajet, à travers ledit insert, ledit insert étant formé de deux viroles tubulaires coaxiales (2, 3) délimitant un conduit de fumées tubulaire (4) présentant des rétrécissements périodiques provoquant une déflexion de la veine de fumées avec une composante radiale, l'insert délimitant avec le corps (1) de l'échangeur thermique un passage à l'intérieur duquel passe l'eau à chauffer.

12. Procédé de fabrication d'un échangeur thermique conforme à l'une au moins des revendications 1 à 7, **caractérisé en ce qu'**il consiste à assembler coaxialement deux viroles (2, 3) formées chacune à partir d'un tube obtenu par pliage d'une tôle d'acier, déformé ensuite par hydroformage.

## Patentansprüche

1. Wärmetauscher für einen Heizkessel, der einen auf dem Weg der Verbrennungsrauchgase angeordneten Einsatz enthält, wobei diese Rauchgase während ihres Wegs durch den Einsatz ihre Wärme an das zu erwärmende Wasser abgeben, wobei der Einsatz von zwei koaxialen rohrförmigen Ringen (2, 3) geformt wird, die einen rohrförmigen Rauchgaskanal (4) begrenzen, welcher periodische Verengungen aufweist, die eine Ablenkung der Rauchgasströmung mit einer radialen Komponente bewirken; wobei der Wärmetauscher **dadurch gekennzeichnet ist, dass** der äußere (2) und der innere (3) Ring je eine Folge von ringförmigen Segmenten (5) aufweisen, die eine divergierende Zone (7), eine konvergierende Zone (6) und eine Zone mit konstantem Querschnitt (8) formen, wobei die Segmente (5) des inneren Rings (3) bezüglich der Segmente (5) des äußeren Rings (2) axial um einen Zwischenraum versetzt sind, der im Wesentlichen dem radialen Abstand zwischen der Fläche des inneren Rings (3) und der Fläche des äußeren Rings (2) entspricht, wobei der maximale äußere Querschnitt des inneren Rings (3) geringer als der oder gleich dem minimalen inneren Querschnitt des äußeren Rings (2) ist.

2. Wärmetauscher für einen Heizkessel nach Anspruch 1, **dadurch gekennzeichnet, dass** der innere Ring (3) mit dem äußeren Ring (2) einen rohrförmigen Rauchgasdurchlass mit variablem Querschnitt begrenzt, und der äußere Ring (2) mit dem Körper des Kondensators (1) einen rohrförmigen Durchlass für den Wasserkreislauf formt.

3. Wärmetauscher für einen Heizkessel nach Anspruch 1 oder 2, **dadurch gekennzeichnet, dass** die Länge der divergierenden Zone (7), gemessen entlang der Längsachse, zwischen 2 und 4 Mal so groß ist wie die Länge der folgenden konvergierenden Zone (6).

4. Wärmetauscher für einen Heizkessel nach Anspruch 1 oder 2, **dadurch gekennzeichnet, dass** die Länge der Zone mit konstantem Querschnitt (8), gemessen entlang der Längsachse, zwischen 2 und 4 Mal so groß ist wie die Länge der folgenden konvergierenden Zone (6).

5. Wärmetauscher für einen Heizkessel nach einem der Ansprüche 1 bis 4, **dadurch gekennzeichnet, dass** die Ringe (2, 3) zwischen 5 und 15 Segmenten (5) aufweisen.

6. Wärmetauscher für einen Heizkessel nach einem der Ansprüche 1 bis 5, **dadurch gekennzeichnet, dass** die Länge der Segmente (5) zwischen 30 und 40 Millimeter für einen äußeren Ring (2) liegt, der einen Querschnitt zwischen 95 und 120 Millimeter und eine Länge zwischen 400 und 500 Millimeter hat.

7. Wärmetauscher für einen Heizkessel nach einem der vorhergehenden Ansprüche, **dadurch gekennzeichnet, dass** die Ringe (2, 3) durch Hydroformen eines Rohrs hergestellt werden, das durch Biegen eines rostfreien Stahlblechs geformt wird.

8. Heizkessel, der einen Brenner und einen Wärmetauscher nach einem der Ansprüche 1 bis 7 umfasst, wobei der Wärmetauscher einen von zwei koaxialen rohrförmigen Ringen (2, 3) geformten Einsatz umfasst, wobei der innere Ring (3) mit dem äußeren Ring (2) einen rohrförmigen Rauchgasdurchlass (4) mit variablem Querschnitt begrenzt, wobei der äußere Ring (2) mit dem Körper des Kondensators (1) einen rohrförmigen Durchlass für den Kreislauf des Wassers formt, wobei der Heizkessel **dadurch gekennzeichnet ist, dass** mindestens der äußere Ring (2) eine Folge von ringförmigen Segmenten (5) aufweist, die eine divergierende Zone (7), eine konvergierende Zone (6) und eine Zone mit konstantem Querschnitt (8) formen.

9. Heizkessel nach dem vorhergehenden Anspruch, **dadurch gekennzeichnet, dass** der Wärmetauscher einen auf dem Weg der Verbrennungsrauchgase angeordneten Einsatz umfasst, wobei diese Rauchgase ihre Wärme während ihres Wegs durch den Einsatz abgeben, wobei der Einsatz von zwei koaxialen rohrförmigen Ringen (2, 3) geformt wird, die einen rohrförmigen Rauchgaskanal (4) begrenzen, welcher periodische Verengungen aufweist, die eine Ablenkung der Rauchgasströmung mit einer radialen Komponente bewirken, wobei der Einsatz mit dem Körper (1) des Wärmetauschers einen Durchlass begrenzt, durch dessen Inneres das zu erwärmende Wasser fließt.

10. Heizkessel nach Anspruch 8 oder 9, **dadurch gekennzeichnet, dass** er einen Sekundärwärmetauscher (30) (Kondensator) enthält, der neben dem Brenner (22) positioniert ist, der einem Haupttauscher (20) zugeordnet ist, wobei die Rauchgase den zwischen den zwei Ringen (2, 3) des Einsatzes liegenden rohrförmigen Raum von einem im oberen Teil des Körpers des Kondensators (1) vorgesehenen Anschluss (9) bis zur Öffnung des unteren Teils des Einsatzes durchqueren, dann die Rauchgase den inneren rohrförmigen Raum des Einsatzes bis zu einem Abfluss durchqueren, der im oberen Teil des Körpers des Kondensators (1) vorgesehen ist.

11. Heizkessel nach Anspruch 8 oder 9, **dadurch gekennzeichnet, dass** er einen Brenner (22) enthält, der oberhalb des Wärmetauschers (20) angeordnet ist, der einen auf dem Weg der Verbrennungsrauchgase angeordneten Einsatz enthält, wobei diese Rauchgase ihre Wärme während ihres Wegs durch den Einsatz hindurch abgeben, wobei der Einsatz von zwei koaxialen rohrförmigen Ringen (2, 3) geformt wird, die einen rohrförmigen Rauchgaskanal (4) begrenzen, der periodische Verengungen aufweist, die eine Ablenkung der Rauchgasströmung mit einer radialen Komponente bewirken, wobei der Einsatz mit dem Körper (1) des Wärmetauschers einen Durchlass begrenzt, durch dessen Inneres das zu erwärmende Wasser fließt.

12. Verfahren zur Herstellung eines Wärmetauschers nach mindestens einem der Ansprüche 1 bis 7, **dadurch gekennzeichnet, dass** es darin besteht, zwei Ringe (2, 3) koaxial zusammenzubauen, die je ausgehend von einem Rohr geformt werden, das durch Biegen eines Stahlblechs erhalten wird, welches anschließend durch Hydroformen verformt wird.

## Claims

1. Heat exchanger for a boiler, comprising an insert placed in the path of the combustion flue gases, these flue gases giving up their heat to the water to be heated as they pass through the said insert, the said insert being formed of two coaxial tubular shell rings (2, 3) delimiting a tubular flue (4) having periodic narrowings that cause the stream of flue gases to be deflected with a radial component; the said heat exchanger being **characterized in that** the outer (2) and inner (3) shell rings each have a succession of annular segments (5) forming a divergent zone (7), a convergent zone (6) and a constant-section zone (8), the said segments (5) of the inner shell ring (3) being axially offset in relation to the segments (5) of the outer shell ring (2) by a spacing that corresponds substantially to the radial distance between the surface of the inner shell ring (3) and the surface of the outer shell ring (2), the maximum external cross section of the inner shell ring (3) being less than or equal to the minimum internal cross section of the outer shell ring (2).

2. Heat exchanger for a boiler according to Claim 1, **characterized in that** the inner shell ring (3) delimits, with the outer shell ring (2), a tubular flue gas passage of variable cross section and the outer shell ring (2) forms, with the body of the condenser (1), a tubular passage through which water can circulate.

3. Heat exchanger for a boiler according to Claim 1 or 2, **characterized in that** the length of the divergent zone (7), measured along the longitudinal axis, is between 2 and 4 times the length of the convergent zone (6) that follows.

4. Heat exchanger for a boiler according to Claim 1 or 2, **characterized in that** the length of the constant-section zone (8), measured along the longitudinal axis, is between 2 and 4 times the length of the convergent zone (6) that follows.

5. Heat exchanger for a boiler according to any one of Claims 1 to 4, **characterized in that** the shell rings (2, 3) have between 5 and 15 segments (5).

6. Heat exchanger for a boiler according to any one of Claims 1 to 5, **characterized in that** the length of the segments (5) is between 30 and 40 millimetres for an outer shell ring (2) that has a cross section of between 95 and 120 millimetres, and a length of between 400 and 500 millimetres.

7. Heat exchanger for a boiler according to any one of the preceding claims, **characterized in that** the shell rings (2, 3) are produced by hydroforming a tube formed by bending a sheet of stainless steel.

8. Boiler comprising a burner and a heat exchanger according to one of Claims 1 to 7, the said heat exchanger comprising an insert formed of two coaxial tubular shell rings (2, 3), the inner shell ring (3) delimiting, with the outer shell ring (2), a variable-section tubular flue gas passage (4), the outer shell ring (2) forming, with the body of the condenser (1), a tubular passage through which water can circulate, the said boiler being **characterized in that** the outer shell ring (2) at least has a succession of annular segments (5) forming a divergent zone (7), a convergent zone (6) and a constant-section zone (8).

9. Boiler according to the preceding claim, **characterized in that** the heat exchanger comprises an insert placed in the path of the combustion flue gases, these flue gases giving up their heat, as they pass, through the said insert, the said insert being formed of two coaxial tubular shell rings (2, 3) delimiting a tubular flue (4) having periodic narrowings that cause the stream of flue gases to be deflected with a radial component, the insert delimiting, with the body (1) of the heat exchanger, a passage through which the water that is to be heated passes.

10. Boiler according to Claim 8 or 9, **characterized in that** it comprises a secondary heat exchanger (30) (condenser) positioned beside the burner (22) associated with a main exchanger (20), the flue gases passing through the tubular space between the two shell rings (2, 3) of the insert from a union (9) provided at the upper part of the body of the condenser (1) as far as an opening in the lower part of the insert, the flue gases then passing through the interior tubular space of the insert as far as an outlet provided at the upper part of the body of the condenser (1).

11. Boiler according to Claim 8 or 9, **characterized in that** it comprises a burner (22) positioned above the heat exchanger (20) comprising an insert placed in the path of the combustion flue gases, these flue gases giving up their heat, as they pass, through the said insert, the said insert being formed of two coaxial tubular shell rings (2, 3) delimiting a tubular flue (4) having periodic narrowings that cause the stream of flue gases to be deflected with a radial component, the insert delimiting, with the body (1) of the heat exchanger, a passage through which the water that is to be heated passes.

12. Method of manufacturing a heat exchanger according to at least one of Claims 1 to 7, **characterized in that** it involves assembling, coaxial with one another, two shell rings (2, 3) that are each formed from a tube obtained by bending a sheet of steel which is subsequently deformed using hydroforming.
